# EUROPEAN PATENT APPLICATION

(11) **EP 4 765 403 A1**
(43) Date of publication of application: **24.06.2026**
(21) Application number: 25787022.0
(22) Date of filing: 24.02.2025
(51) Int. Cl.: H01M 50/262, H01M 50/291, H01M 50/24, H01M 50/249, F16B 31/00

(54) **BATTERY PACK AND VEHICLE INCLUDING SAME**

(30) Priority: 08.04.2024 KR 20240047651
(71) Applicant: LG Energy Solution, Ltd., Seoul 07335 (KR)
(72) Inventor: PARK, Shin-Young, Daejeon 34122 (KR); KANG, Jong-Mo, Daejeon 34122 (KR); MUN, Jeong-O, Daejeon 34122 (KR); SEO, Sung-Won, Daejeon 34122 (KR); LEE, Sang-Joon, Daejeon 34122 (KR); HWANG, Tae-Won, Daejeon 34122 (KR)
(74) Representative: Plasseraud IP
(86) International application number: PCT/KR2025/002567
(87) International publication number: WO 2025/216430

(57) **Abstract**

A battery pack according to the present disclosure may include: a pack case having a storage space configured to store a plurality of battery cells therein and an opening formed on one side; a pack lid configured to cover the opening; a partition frame coupled to the pack case so as to partition the storage space; and a bolt member having at least a portion configured to pass through the pack lid and to be coupled to the partition frame, and a first thread portion disposed at an end close to the partition frame, wherein the first thread portion may include a high-temperature-sensitive material whose physical properties change in a predetermined high-temperature environment so that bonding strength between the bolt member and the partition frame is weakened.

## Description

### TECHNICAL FIELD

The present disclosure relates to a battery pack and, more specifically, to a battery pack in which a pack lid swells in response to increased internal pressure when a thermal event occurs in the battery pack, thereby reducing the internal pressure of the battery pack, slowing down a rate of increase in internal pressure, and delaying thermal propagation.

This application is based on and claims priority from Korean Patent Application No. 10-2024-0047651, filed on April 08, 2024, with the Korean Intellectual Property Office, the disclosure of which is incorporated herein in its entirety by reference.

### BACKGROUND ART

Semi-permanent batteries that convert electrical energy into chemical energy and can be repeatedly charged and discharged are called secondary batteries distinguished from primary batteries that cannot be reused after use.

In particular, lithium-ion secondary batteries have advantages such as high energy storage density, lightweight and miniaturized structures, excellent safety, a low discharge rate, and a long lifespan, so they are widely used as electric vehicle batteries nowadays. For reference, lithium secondary batteries are generally classified into cylindrical, prismatic, and pouch types depending on their manufacturing types, and their uses range from electric vehicle batteries to energy storage system (ESS) batteries and other electrical devices.

Currently, the operating voltage of one lithium-ion secondary battery cell is approximately 2.5V to 4.5V. Therefore, in order to apply secondary batteries to an energy source for electric vehicles, a plurality of lithium-ion second battery cells are connected in series and/or parallel to produce a battery module, and then the battery modules are connected in series and/or parallel to produce a battery pack.

Meanwhile, since secondary batteries involve chemical reactions during charging and discharging, their performance may deteriorate when used at a temperature higher than an appropriate temperature, and failure of heat control to an appropriate temperature is likely to lead to unexpected ignition or explosion. Furthermore, the battery pack, which is an assembly of secondary batteries, is structured to house these secondary batteries as compactly as possible inside the pack case, making it vulnerable to thermal events.

Accordingly, if a specific battery module overheats or a thermal event such as thermal runaway occurs therein, the internal pressure of the battery pack increases due to venting gas and flames generated in the battery module where the event occurred, accelerating the accumulation of thermal energy, which may easily lead to thermal propagation to adjacent battery modules. This may lead to a problem of serial thermal runaway of battery modules and explosion of the entire battery pack.

Accordingly, it is necessary to improve the structure of the battery pack to reduce the internal pressure of the battery pack caused by venting gas and flames generated from a thermal event in the battery module that first ignited, and to effectively dissipate the thermal energy, thereby delaying thermal propagation between neighboring battery modules.

### DISCLOSURE

### Technical Problem

The present disclosure is designed to solve the problems of the related art, and therefore the present disclosure is directed to providing a battery pack with reinforced structural rigidity and a vehicle including the same.

In addition, the present disclosure is to provide a battery pack with reinforced fixing strength between the pack lid and the partition frame, and a vehicle including the same.

In addition, the present disclosure is to provide a battery pack capable of effectively preventing thermal propagation due to a reduction in the bonding strength between the bolt member and the partition frame when a thermal event occurs inside the battery pack, and a vehicle including the same.

In addition, the present disclosure is to provide a battery pack capable of effectively preventing thermal propagation as the pack lid swells when a thermal event occurs inside the battery pack, and a vehicle including the same.

In addition, the present disclosure is to provide a battery pack with improved pack case assembly and productivity, and a vehicle including the same.

In addition, the present disclosure is to provide a battery pack with improved structural stability and a vehicle including the same.

In addition, the present disclosure is to provide a battery pack capable of effectively preventing thermal propagation by preventing the inflow of oxygen and the emission of flame, and a vehicle including the same.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a pack case having a storage space configured to store a plurality of battery cells therein and an opening formed on one side; a pack lid configured to cover the opening; a partition frame coupled to the pack case so as to partition the storage space; and a bolt member having at least a portion configured to pass through the pack lid and to be coupled to the partition frame, and a first thread portion disposed at an end close to the partition frame, wherein the first thread portion may include a high-temperature-sensitive material whose physical properties change in a predetermined high-temperature environment so that bonding strength between the bolt member and the partition frame is weakened.

The pack lid may be configured to swell when internal pressure of the storage space increases.

The high-temperature-sensitive material may be configured to melt in a predetermined high-temperature environment and function as a lubricant.

The high-temperature-sensitive material may be configured as a resin material.

The high-temperature-sensitive material may be coated on an outer surface of the first thread portion.

A fastening hole having a female thread may be formed in the partition frame so that the bolt member is fastened thereto, and a length of the first thread portion may correspond to a depth of the fastening hole.

The bolt member may further include a second thread portion formed continuously with the first thread portion on a side far from the partition frame.

The second thread portion may be configured as a metal material.

The second thread portion may have an outer surface that is treated with heat treatment locking coating.

The second thread portion may include a core extending toward the partition frame, and the first thread portion may be configured so that the high-temperature-sensitive material is formed to surround the core.

The battery pack may further include a middle member disposed between the pack lid and the partition frame, and configured so that the bolt member passes therethrough.

The middle member may be in close contact with the pack lid and the partition frame.

The middle member may be configured as a bonding nut having a female thread formed on an inner side and at least a portion bonded to the pack lid.

The battery pack may further include a sealing material disposed between the pack lid and the bolt member to seal them.

In another aspect of the present disclosure, there is provided a vehicle including at least one battery pack according to the present disclosure.

### Advantageous Effects

According to the present disclosure, it is possible to provide a battery pack with reinforced structural rigidity by the bolt member and the partition frame, and a vehicle including the same.

In addition, according to the present disclosure, it is possible to provide a battery pack with reinforced fixing strength between the pack lid and the partition frame by the bolt member, and a vehicle including the same.

In addition, according to the present disclosure, it is possible to provide a battery pack capable of effectively preventing thermal propagation due to a reduction in the bonding strength between the bolt member and the partition frame when a thermal event occurs inside the battery pack, and a vehicle including the same.

In addition, according to the present disclosure, it is possible to provide a battery pack capable of effectively preventing thermal propagation as the pack lid swells when a thermal event occurs inside the battery pack, and a vehicle including the same.

In addition, according to the present disclosure, it is possible to provide a battery pack with improved pack case assembly and productivity by the bolt member, and a vehicle including the same.

In addition, according to the present disclosure, it is possible to provide a battery pack with further improved assembly and productivity by the middle member and with improved structural stability, and a vehicle including the same.

In addition, according to the present disclosure, it is possible to provide a battery pack capable of effectively preventing thermal propagation by preventing the inflow of oxygen and the emission of flame by the middle member or sealing material, and a vehicle including the same.

The effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view illustrating a battery pack according to an embodiment of the present disclosure.
FIG. 2 is an exploded perspective view of the battery pack in FIG. 1.
FIG. 3 is a cross-sectional view illustrating a bolt member coupled to a partition frame in a battery pack according to an embodiment of the present disclosure.
FIG. 4 is a cross-sectional view illustrating a bolt member is separated from a partition frame in a battery pack according to an embodiment of the present disclosure.
FIG. 5 is a cross-sectional view taken along line A - A' in FIG. 1.
FIG. 6 is a cross-sectional view illustrating a pack lid swelling in FIG. 5.
FIG. 7 is a perspective view illustrating a bolt member of a battery pack according to another embodiment of the present disclosure.
FIG. 8 is a cross-sectional view illustrating a middle member further disposed on a bolt member and a partition frame in a battery pack according to an embodiment of the present disclosure.
FIG. 9 is a cross-sectional view illustrating a sealing material further disposed on a bolt member and a partition frame in a battery pack according to an embodiment of the present disclosure.
FIG. 10 is a drawing illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure.

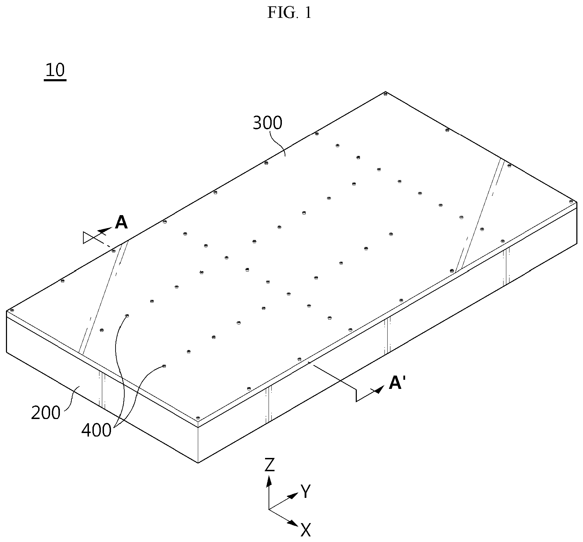

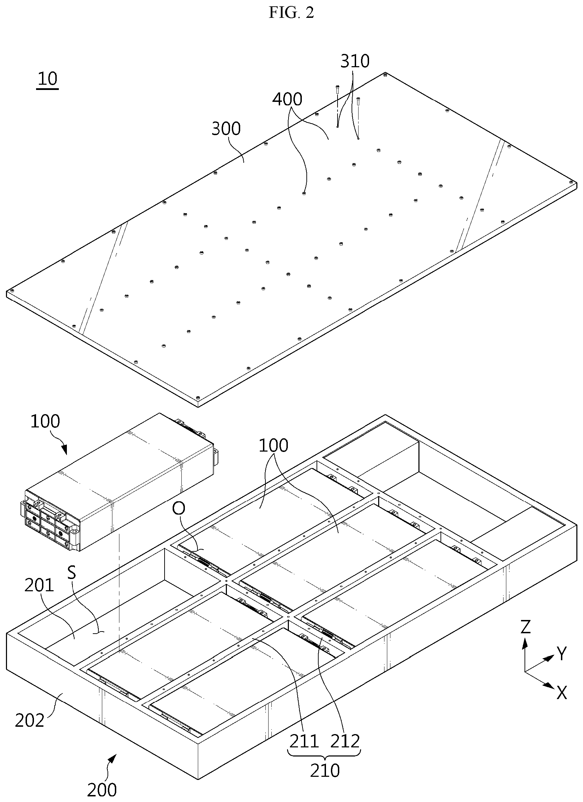

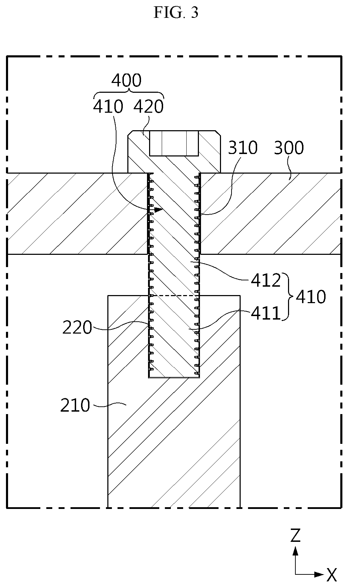

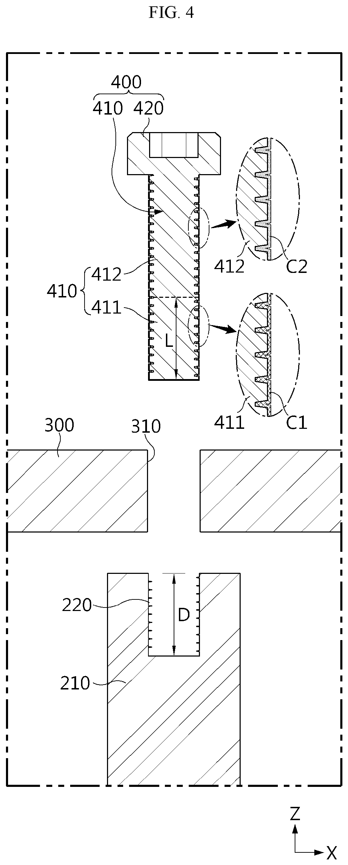

FIG. 1 is a perspective view illustrating a battery pack according to an embodiment of the present disclosure, FIG. 2 is an exploded perspective view of the battery pack in FIG. 1, FIG. 3 is a cross-sectional view illustrating a bolt member coupled to a partition frame in a battery pack according to an embodiment of the present disclosure, and FIG. 4 is a cross-sectional view illustrating a bolt member is separated from a partition frame in a battery pack according to an embodiment of the present disclosure.

Hereinafter, a battery pack 10 according to an embodiment of the present disclosure will be described in detail with reference to FIGS. 1 to 4. The battery pack 10 according to an embodiment of the present disclosure includes a pack case 200, a pack lid 300, a partition frame 210, and a bolt member 400.

A storage space S and an opening O are formed in the pack case 200. A plurality of battery cells 100 are stored in the storage space S. The battery cell 100 may be understood as a secondary battery including an electrode assembly, and a pouch case that stores an electrolyte and the electrode assembly. Although the present embodiment will be described based on a pouch-type battery cell 100 having a high energy density and easy stacking, the disclosure is not limited thereto, and it is obvious that a cylindrical or prismatic secondary battery may be applied to the battery cell 100.

The pouch-type battery cell 100 may include a pair of electrode leads that are connected to the electrode assembly and extend outside the pouch case, thereby functioning as electrode terminals. The battery cell 100 may further include electrical components such as a bus-bar, a bus-bar frame, and a module connector, which are mounted adjacently to the pair of electrode leads.

The battery cells 100 may be stored as a battery module in the storage space S of the pack case 200 in units of modules. In this case, the battery module may include a module case. At least one battery cell 100 may be stored in the module case. The module case may be made of a metal material or a plastic material such as ABS resin that has high rigidity and durability to physically or chemically protect the stored battery cell 100. A terminal of the battery module may be provided on the side of the module case. The terminal may be either a positive electrode or a negative electrode, and may be disposed on both sides or one side of the module case.

The storage space S is formed inside the pack case 200. The pack case 200 includes a bottom 201 and a side wall 202 surrounding the bottom 201, and the bottom 201 and the side wall 202 form the storage space S therein.

A partition frame 210 is coupled to the pack case 200. The partition frame 210 is coupled to the pack case 200 to partition the storage space S. The partition frame 210 may be disposed across the storage space S. The partition frame 210 may include a horizontal frame 211 and a vertical frame 212. The horizontal frame 211 may be formed to extend in the Y-axis direction and partition the storage space S along the X-axis direction. The vertical frame 212 may be formed to extend in the X-axis direction and partition the storage space S along the Y-axis direction. Although the pack case 200 is illustrated as having two horizontal frames 211 and one vertical frame 212 in the present disclosure, the number of horizontal frames 211 and vertical frames 212 or the number of battery cells 100 stored therein is not limited thereto and may vary. The horizontal frame 211 or vertical frame 212 may also be referred to as a "cross beam" or a "center beam."

The pack case 200 and the partition frame 210 may be made of a metal material such as steel or aluminum to withstand the load of the battery cells 100 and protect the battery cells 100 from external force.

An opening O is formed on one side of the pack case 200. As shown in the drawing, the opening O may be formed on the upper side of the pack case 200. A pack lid 300 is disposed on the opening O. The pack lid 300 is disposed to cover the opening O. The pack lid 300 may cover the storage space S of the pack case 200 so as to isolate the storage space S from the outside. The pack lid 300 may be configured in a shape corresponding to the shape of the opening O. For example, if the opening O has a rectangular shape, the pack lid 300 may also be configured in a rectangular shape. The pack lid 300 may be configured to be slightly larger than the opening O so as to cover the edge of the opening O. The pack lid 300 may be configured as a thin plate. For example, the pack lid 300 may be configured in the shape of a rectangular thin plate. The pack lid 300 may be made of a metal material such as aluminum, which is the same as or similar to the pack case 200 and the partition frame 210. Alternatively, the pack lid 300 may be configured as a material capable of being elastically deformed or plastically deformed by an external force.

The bolt member 400 is configured such that at least a portion thereof passes through the pack lid 300 and is coupled to the partition frame 210. A plurality of bolt members 400 may be provided. The bolt member 400 may pass through the pack lid in a direction parallel to the Z-axis direction. The bolt member 400 may be fastened and coupled to the partition frame 210.

The bolt member 400 may be configured such that at least a portion thereof extends toward one end, and at least a portion of the one end may pass through the pack lid 300. The bolt member 400 includes a male thread portion 410, and may further include a head 420 formed thereon, and the thread portion 410 may pass through the pack lid 300. The male thread portion 410 may be formed continuously at a predetermined pitch from one end to the other end. The bolt member 400 may be made of a metal material such as steel/SUS. Such a material is resistant to high temperatures and has excellent rigidity, thereby securing high fastening strength.

The bolt member 400 includes a first thread portion 411. The first thread portion 411 is formed at an end of the bolt member 400 close to the partition frame 210. Referring to the drawing, the first thread portion 411 may be formed at a lower end of the bolt member 400. The first thread portion 411 may be a part of the thread portion 410. That is, a partial pitch section at the lower end of the thread portion 410 may be referred to as the first thread portion 411. The first thread portion 411 may be formed on a portion of the thread portion 410, which is close to the partition frame 210 and far from the pack lid 300. The first thread portion 411 may be understood as a portion of the bolt member 400 that is to be fastened to the partition frame 210.

A through-hole 310 may be formed in the pack lid 300 such that the bolt member 400 may pass therethrough. A number of through-holes 310 corresponding to the number of bolt members 400 may be formed at positions corresponding to those of bolt members 400. The through-hole 310 does not have a female thread, so that the thread portion 410 of the bolt member 400 may pass through the through-hole 310 without screw-engagement, and the head 420 may be supported on the upper surface of the pack lid 300 without passing through the through-hole 310.

A fastening hole 220 may be formed in the partition frame 210. The bolt member 400 may be fastened and coupled to the fastening hole 220. The fastening hole 220 may have a female thread formed to correspond to the male thread portion 410 of the bolt member 400. The fastening hole 220 may be formed by performing tapping process on the partition frame 210. The bolt member 400 may be coupled to the partition frame 210 by bolting through the fastening hole 220. In this case, the first thread portion 411 may be understood to include a portion that is fastened to the fastening hole 220 in the bolt member 400.

A number of fastening holes 220 corresponding to the number the bolt members 400 may be provided at positions corresponding to those of the bolt members 400. A plurality of fastening holes 220 may be disposed spaced apart from each other. The distance between a pair of fastening holes 220 adjacent to each other may be formed differently from the distance between another pair of fastening holes 220 adjacent to each other. The fastening holes 220 may be disposed in a partial area or entire area of the partition frame 210.

The bolt member 400 may further include a second thread portion 412. The second thread portion 412 is a portion formed continuously from the first thread portion 411 on the side far from the partition frame 210. The second thread portion 412 may be a portion between the first thread portion 411 and the head 420. The second thread portion 412 may constitute the thread portion 410 together with the first thread portion 411. The second thread portion 412 may be disposed close to the pack lid 300 and far from the partition frame 210 in the thread portion 410. That is, a partial pitch section at the upper end of the thread portion 410 may be referred to as the second thread portion 412. The second thread portion 412 may be understood as a portion including an area that is not fastened to the partition frame 210 or the fastening hole 220 in the bolt member 400. When the bolt member 400 is completely fastened to the partition frame 210, the second thread portion 412 may be disposed in an area corresponding to the pack lid 300, and as will be described below, when a middle member 500 is further disposed between the pack lid 300 and the partition frame 210, the second thread portion 412 may also be disposed in an area corresponding to the middle member 500.

The first thread portion 411 includes a high-temperature-sensitive material whose physical properties change in a predetermined high-temperature environment, thereby weakening the bonding strength between the bolt member 400 and the partition frame 210. Here, the predetermined high-temperature environment may be, for example, an environment of 100 to 250 degrees C, and preferably, an environment of 150 to 200 degrees C. When a thermal event occurs inside the battery pack 10, the predetermined high-temperature environment may be created due to the discharge of venting gas and solid discharges, which may increase the internal pressure of the battery pack 10. Here, the change in the physical properties may indicate, for example, that the relevant material melts at high temperatures.

When a high-temperature and high-pressure thermal event occurs inside the battery pack 10, a portion including the high-temperature-sensitive material in the first thread portion 411 may have a change in the physical properties, so that the fixing strength between the pack lid 300 and the partition frame 210 may deteriorate, making it possible to secure a space in which the pack lid 300 may swell. Through this, thermal propagation may be prevented.

In the prior art, when manufacturing a battery pack 10, bolts and nuts made of steel/SUS were applied to the fastening portions between the pack case 200 and the pack lid 300. However, even when a thermal event occurs in this battery pack 10, the pack lid 300 is unable to swell due to the strong bolting connection. That is, since the pack lid 300 of the conventional battery pack 10 is firmly fixed by the bolting connection, it is unable to swell, so it is vulnerable to the thermal propagation.

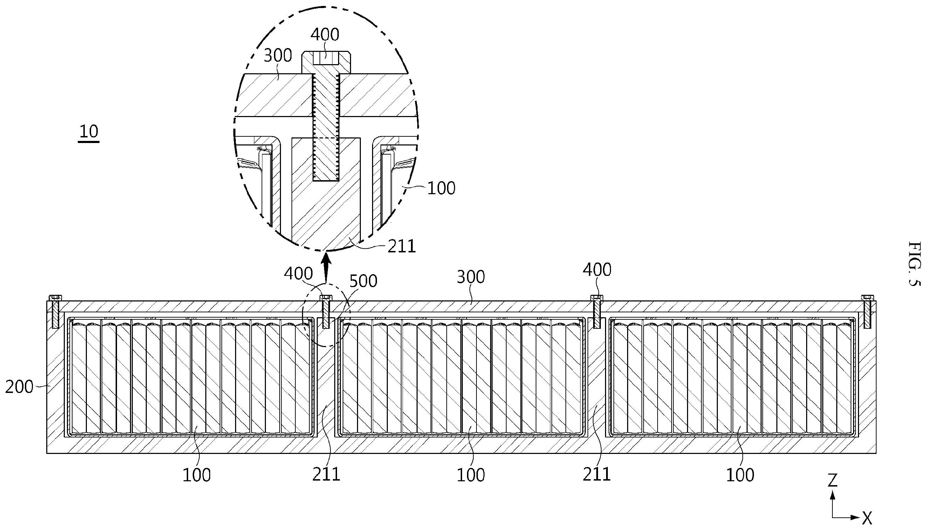

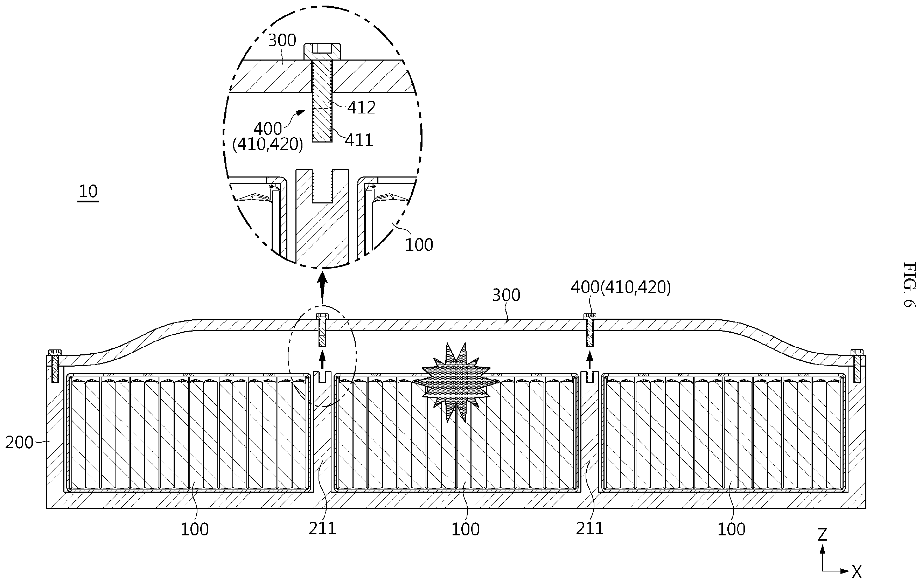

On the other hand, in the battery pack 10 according to an embodiment of the present disclosure, the bolt member 400 including the first thread portion 411 may be coupled to the partition frame 210 by strong bolting to meet vibration and impact test conditions in normal cases, thereby securing structural stability, whereas, in the event of a thermal event such as ignition of the battery cell 100, the bonding strength between the bolt member 400 and the partition frame 210 may be weakened, thereby allowing the pack lid 300 to swell to prevent thermal propagation. Here, the weakening of the bonding strength between the bolt member 400 and the partition frame 210 indicates a state in which the bolt member 400 and the partition frame 210 are easily separated from each other. This effect will be discussed in more detail in the following description with reference to FIGS. 5 and 6.

The high-temperature-sensitive material included in the first thread portion 411 may melt in a predetermined high-temperature environment and function as a lubricant. Specifically, the first thread portion 411 may remain in a solid state in normal cases, but may melt to a liquid state due to its physical properties changing in a predetermined high-temperature environment, so that the high-temperature-sensitive material in this state may perform a lubricant function by reducing the frictional force between the bolt member 400 and the fastening hole 220. Accordingly, in a predetermined high-temperature environment, the bolt member 400 may enter the state where it is easily separated from the fastening hole 220 of the partition frame 210.

The high-temperature-sensitive material included in the first thread portion 411 may be a resin material. The high-temperature-sensitive material may be a moldable material. The melting point of the high-temperature-sensitive material may be configured lower than the melting point of the material constituting the partition frame 210. The resin absorbs impact and vibration to maintain the fastening portion.

The resin may be a natural resin, a synthetic resin, or a high-strength resin, and may be a thermoplastic resin capable of melting in a high-temperature environment. The resin may be, for example, polycarbonate, polyurethane, polyester resin, etc., but these are only examples and it is not limited thereto. Here, the resin may have the property of melting or softening in a high-temperature environment, such as an environment of 100 to 250 degrees C, or may contain an additive that adjusts the melting point or glass transition temperature to fall within the range of the high-temperature environment. Preferred resins may include crystalline plastics belonging to the polyolefin series, such as polypropylene (PP). In addition, preferred resins may include engineering plastics such as MC (mono-casting) nylon or polyacetal, or ether and ester polyurethanes.

Polypropylene has a polyethylene molecular chain in which a methyl group (CH₃) is attached one by one to each carbon atom in the form of short branches regularly repeated. Polypropylene has the advantage of being very light with a specific gravity of 0.92, a high melting temperature of 135 to 160 degrees C, and a wide range of applications. In addition, polypropylene has the advantage of not being sticky when melting at high temperatures. Therefore, it may weaken the bonding strength between the bolt member 400 including the first thread portion 411 and the partition frame 210 in a predetermined high-temperature environment.

MC nylon has a structure in which imide bonds and ether bonds are mixed, and the imide bond provides appropriate heat resistance and strength, and the ether bond exhibits excellent processability. MC nylon has a strength similar to metal, is easier to process than general plastics, and is resistant to wear. It may withstand high temperatures up to 200 degrees C and melt at temperatures higher than that, thereby weakening the bonding strength between the bolt member 400 including the first thread portion 411 and the partition frame 210.

Polyacetal is a high-strength thermoplastic plastic with a hardness similar to metal. It withstands high temperatures of about 80 to 120 degrees C, but it has heat resistance capable of withstanding temperatures up to about 150 degrees C for continuous use for a short period of time, so it may be applied without difficulty in a temperature environment where the battery pack 10 is used in a normal state.

The length L of the first thread portion 411 may correspond to the depth D of the fastening hole 220. That is, the length L of the first thread portion 411 may be configured to be the same as the depth D of the fastening hole 220. In this case, the first thread portion 411 of the thread portion 410 may be understood as a portion to be inserted into the fastening hole 220, and the second thread portion 412 may be understood as the remaining portion of the thread portion 410, excluding the first thread portion 411. In the case where the length L of the first thread portion 411 is configured to be the same as the depth D of the fastening hole 220, the bonding strength between the bolt member 400 and the partition frame 210 may be maintained strongly in normal cases, while the bonding strength between the bolt member 400 and the partition frame 210 may be effectively weakened in a predetermined high-temperature environment.

The first thread portion 411 may have a high-temperature-sensitive material coated on the outer surface thereof. In particular, referring to FIG. 4, a first coating C1 may be formed on the outer surface of the thread portion 410 where the male thread portion is formed in a specific pitch section corresponding to the first thread portion 411. The first coating C1 may be configured as a high-temperature-sensitive material. In this case, the first thread portion 411 having the first coating C1 may be manufactured by coating a high-temperature-sensitive material on a specific pitch section of the thread portion 410 corresponding to the end of the partition frame 210 of the bolt member 400, so that the first thread portion 411 may be manufactured easily. In addition, there is also the advantage in which the bonding strength between the bolt member 400 and the partition frame 210 may be maintained strongly in normal cases, and in which the bonding strength between the bolt member 400 and the partition frame 210 may be effectively weakened in a predetermined high-temperature environment.

The second thread portion 412 may be configured as a metal material. That is, the first thread portion 411 may include a high-temperature-sensitive material, whereas the second thread portion 412 may be configured as a metal material excluding a high-temperature-sensitive material. The second thread portion 412 may be made of a metal material such as steel/SUS. This material is resistant to high temperatures and has excellent rigidity, thereby securing high fastening strength.

The outer surface of the second thread portion 412 may be treated with heat treatment locking coating. The heat treatment locking coating is a special type of coating applied to parts such as bolts and screws, and is applied to the surface of a relevant part through a heat treatment process, and the hardness and durability of the surface of the part may be improved after the heat treatment process. In particular, referring to FIG. 4, a second coating C2 may be formed on the outer surface of the thread portion 410 where the male thread portion is formed in the remaining pitch section corresponding to the second thread portion 412. The second coating C2 may be a coating layer obtained by heat treatment locking coating. Since the outer surface of the second thread portion 412 is subject to the heat treatment locking coating treatment, the seal between the bolt member 400 and the pack lid 300 may be reinforced, thereby preventing the inflow of oxygen or the emission of flame, and effectively preventing thermal propagation.

As described above, the first coating C1 may be formed in some of the pitch section of the thread portion 410, and the second coating C2 may be formed in the remaining pitch section. That is, the bolt member 400 may be configured as a special bolt obtained by different coating processes depending on the pitch section.

FIG. 5 is a cross-sectional view taken along line A - A' in FIG. 1, and FIG. 6 is a cross-sectional view illustrating a pack lid swelling in FIG. 5.

Hereinafter, the process in which a pack lid 300 of the battery pack 10 swells according to an embodiment of the present disclosure will be described in detail with reference to FIGS. 5 and 6. FIG. 5 shows the battery pack 10 before the pack lid 300 swells, and FIG. 6 shows the battery pack 10 with the pack lid 300 swelling.

The battery pack 10 in a normal state may have a cross-section shown in FIG. 5. Since a bolt member 400 having a special bolt obtained different coating processes between pitch sections is used, the bolt member 400 may be fixed to the pack lid 300 in a normal state to secure structural safety from vibration/shock. The battery pack 10 according to an embodiment of the present disclosure may be configured so that the pack lid 300 swells to the state shown in FIG. 6 when the internal pressure of the storage space increases.

When a thermal event occurs inside the battery pack 10, high-temperature heat may be generated due to the discharge of venting gas and solid discharges, and the internal pressure may increase. High-temperature heat may be transferred to the bolt member 400 and partition frame 210 that are coupled to each other (see FIG. 5), and thus a predetermined high-temperature environment may be created on the first thread portion 411 of the bolt member 400. In this high-temperature environment, for example, the first coating C1 of the bolt member 400 melts and acts as a lubricant, thereby weakening the fastening strength of the bolt member 400 and the fixing strength between the pack lid 300 and the partition frame 210. At the same time, when the increased internal pressure of the pack case 200 acts on the pack lid 300, the bolt member 400 may eventually be decoupled and separated from the partition frame 210. Then, the pack lid 300 and the partition frame 210 may be spaced apart from each other to form a space therebetween, so that the increased internal pressure may be relieved. In the case where the increased internal pressure of the battery pack 10 continues to be maintained, instead of being relieved, an event such as ignition occurring in some battery cells 100 is likely to be transferred to other battery cells 100. However, according to the present disclosure, the bonding strength between the bolt member 400 and the partition frame 210 is weakened, thereby causing the pack lid 300 to be spaced and alleviating the increase in internal pressure, so thermal propagation may be prevented.

In addition, in the case where the pack lid 300 is made of a material capable of elastic deformation or plastic deformation by an external force, the pack lid 300 may further swell in a direction in which the internal pressure is applied (see FIG. 6). As the pack lid 300 swells, the volume of the space between the pack case 200 and the pack lid 300 increases, so that the increased internal pressure may be relieved, and the flow of venting gas or solid discharges may be formed more smoothly. Through this, the thermal propagation may be effectively delayed or prevented.

As described above, according to the present disclosure, the expansion of the pack lid 300 is induced so that the gap between the pack lid 300 and the partition frame 210 is widened, thereby expanding the inner space of the battery pack 10 to alleviate the increase in internal pressure and delay or prevent the thermal propagation. In addition, even when the gap between the pack lid 300 and the partition frame 210 is widened, the bolt member 400 may remain in the through-hole 310 of the pack lid 300, and for example, the inflow of oxygen or the emission of flame through the through-hole 310 may be blocked by the second coating C2. Through the above structure of the battery pack 10, pack safety preventing thermal propagation may be secured.

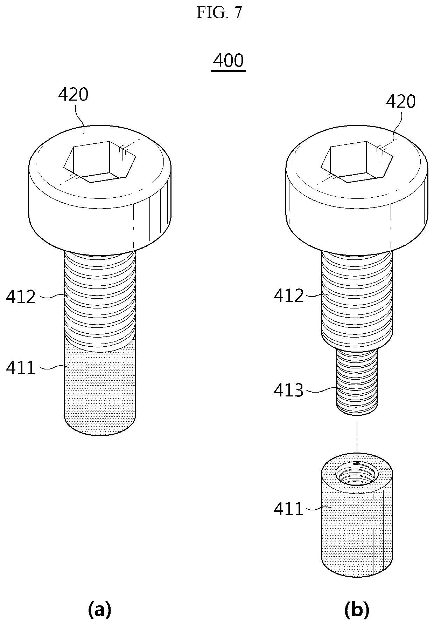

FIG. 7 is a perspective view illustrating a bolt member of a battery pack according to another embodiment of the present disclosure.

FIG. 7(a) illustrates a bolt member 400 of a battery pack 10 according to another embodiment of the present disclosure, and FIG. 7(b) illustrates an exploded view of the bolt member 400 in FIG. 7(a).

The bolt member 400 of the battery pack 10 according to another embodiment of the present disclosure includes a thread portion 410 having a first thread portion 411, a second thread portion 412, and a core 413.

The core 413 may be formed to extend toward the partition frame 210. The core 413 may be formed to extend from the second thread portion 412 in a direction away from the head 420, and the core 413 may be formed integrally with the second thread portion 412. The core 413 may be surrounded by a high-temperature-sensitive material. The first thread portion 411 may be formed by providing the high-temperature-sensitive material to surround the core 413. That is, the first thread portion 411 may be a portion corresponding to the core 413 and the high-temperature-sensitive material surrounding the core 413. In the case where the first thread portion 411 is formed as described above, the first thread portion 411 may include a more amount of high-temperature-sensitive material and may be stably coupled to the second thread portion 412.

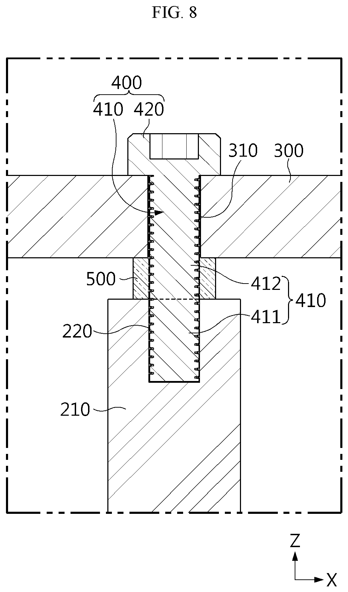

FIG. 8 is a cross-sectional view illustrating a middle member further disposed on a bolt member and a partition frame in a battery pack according to an embodiment of the present disclosure.

Hereinafter, a middle member 500 will be described in detail with reference to FIG. 8. The middle member 500 is disposed between the pack lid 300 and the partition frame 210 such that the bolt member 400 passes therethrough. The middle member 500 may be made of a metal material such as steel/SUS. These materials are resistant to high temperatures and have excellent rigidity.

The middle member 500 may support the bolt member 400. The bolt member 400 may be supported and fixed by the middle member 500 before being coupled to the partition frame 210.

The middle member 500 may support the pack lid 300 and the partition frame 210. For example, the middle member 500 may support the pack lid 300 upward and support the partition frame 210 downward. As described above, since the middle member 500 supports the pack lid 300 and the partition frame 210, even if an impact or vibration is applied to the battery pack 10, they may be effectively buffered, thereby further enhancing structural stability.

The middle member 500 may be in close contact with the pack lid 300 and the partition frame 210. That is, the middle member 500 may be in close contact with both the pack lid 300 and the partition frame 210. The pack lid 300 and the partition frame 210 may be spaced a predetermined distance apart from each other by the middle member 500. The middle member 500 may seal the gap between the pack lid 300 and the partition frame 210.

The middle member 500 may be configured as a bonding nut having a female thread formed on the inner side, and at least a portion of which may be bonded to the pack lid 300. The thread portion 410 of the bolt member 400 may be fastened to the female thread of the bonding nut. The bonding nut may be bonded and fixed to the pack lid 300, and the upper end of the bonding nut may be bonded to the lower surface of the pack lid 300. As described above, in the case where the middle member 500 is configured as a bonding nut bonded to the pack lid 300, the bonding strength between the bolt member 400 and the partition frame 210 may be further strengthened. The bolt member 400 may be fastened to the bonding nut fixed to the pack lid 300, so that the bolt member 400 may be pre-fixed to the pack lid 300. The bolt member 400 pre-fixed to the pack lid 300 may then be fastened to the partition frame 210.

That is, while a plurality of middle members 500 are fixed to the lower surface of the pack lid 300, a plurality of bolt members 400 may be pre-fixed to the pack lid 300 through the middle members 500, and then, as the pack lid 300 is disposed to cover the opening O of the pack case 200, the plurality of bolt members 400 may be fastened to the corresponding partition frame 210 at once. Therefore, since there is no need to respectively align and fasten the bolt members 400, the assembly efficiency of the battery pack 10 is improved, and the assembly accuracy is increased.

In addition, even in a situation where a thermal event occurs inside the battery pack 10 so that the bolt member 400 and the partition frame 210 are separated from each other, the bolt member 400 may remain in the fixed state to the pack lid 300, thereby preventing the bolt member 400 from being separated from the pack lid 300 or popping out of the pack lid 300. Therefore, even when the gap between the pack lid 300 and the partition frame 210 is widened in a high-temperature environment, the bolt member 400 may be reliably maintained in a state of being fastened to the middle member 500 in the through-hole 310 of the pack lid 300, thereby blocking the inflow of oxygen or the emission of flame through the through-hole 310.

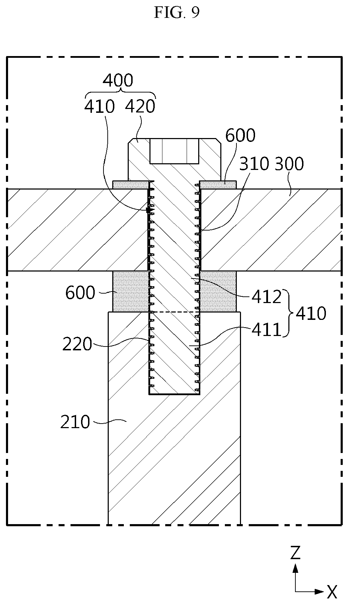

FIG. 9 is a cross-sectional view illustrating a sealing material further disposed on a bolt member and a partition frame in a battery pack according to an embodiment of the present disclosure.

Hereinafter, a sealing material 600 will be described in detail with reference to FIG. 9. The sealing material 600 is configured to seal the gap between the pack lid 300 and the bolt member 400. Unlike the high-temperature-sensitive material described above, the sealing material 600 may be formed of a material capable of maintaining its properties even at high temperatures.

The sealing material 600 may be disposed on the outer surface of the pack lid 300, which is far from the partition frame 210. The sealing material 600 may be disposed between the head 420 of the bolt member 400 and the outer surface of the pack lid 300.

The sealing material 600 may also be disposed on the inner surface of the pack lid 300. In this case, the sealing material 600 may be disposed between the inner surface of the pack lid 300 and the partition frame 210.

Although not shown in FIG. 9, the sealing material 600 may also be disposed inside the through-hole 310 of the pack lid 300.

The conventional battery pack 10 has a disadvantage of being vulnerable to thermal propagation due to the inflow of oxygen or the emission of flame occurring through the bolting hole for bolting connection. In the battery pack 10 according to an embodiment of the present disclosure, the sealing material 600 may prevent the inflow of oxygen or the emission of flame by implementing a seal between the bolt member 400 and the pack lid 300, thereby more effectively preventing the thermal propagation.

Meanwhile, a combination of the embodiments in FIG. 8 and FIG. 9 may also be provided. That is, a battery pack 10 having both the middle member 500 and the sealing material 600 may also be implemented. In this case, a part of the sealing material 600 may be configured to seal the gap between the pack lid 300 and the middle member 500 and/or the gap between the middle member 500 and the partition frame 210.

Meanwhile, although not shown in the drawing, the battery pack 10 according to the present disclosure may further include various devices for controlling charging and discharging of battery cells 100, such as a BMS (Battery Management System), a current sensor, a fuse, and the like.

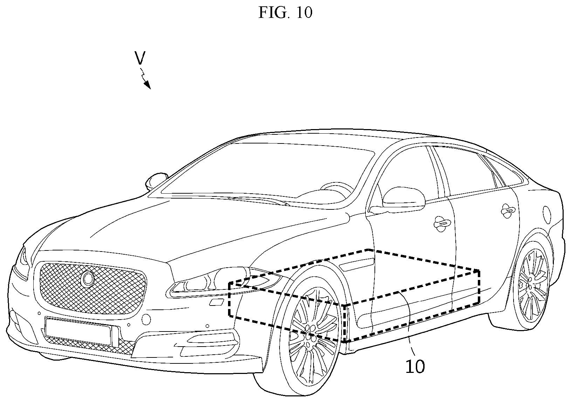

FIG. 10 is a drawing illustrating a vehicle according to an embodiment of the present disclosure.

Referring to FIG. 10, the battery pack 10 according to the present disclosure may be applied to a vehicle V such as an electric vehicle or a hybrid vehicle. That is, the vehicle V according to the present disclosure may include the battery pack 10 according to the present disclosure. The battery pack 10 may be installed in the body frame under the vehicle seat or in a trunk space, and the battery pack 10 may be installed in a reversed order as needed.

Although terms indicating directions such as up, down, left, right, front, and back directions are used in this specification, it is obvious to those skilled in the art to which the present disclosure pertains that these terms are only for convenience of explanation with reference the relevant drawings and may vary depending on the position of the target object or the position of the observer.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

### [Description of Reference numerals]

10: Battery pack
100: Battery cell
200: Pack case
201: Bottom
202: Side wall
210: Partition frame
211: Horizontal frame
212: Vertical frame
220: Fastening hole
300: Pack lid
400: Bolt member
410: Thread portion
411: First thread portion
412: Second thread portion
413: Core
420: Head
500: Middle member
600: Sealing portion
C1: First coating
C2: Second coating
O: Opening
S: Storage space
V: Vehicle

## Claims

1. A battery pack comprising:
a pack case having a storage space configured to store a plurality of battery cells therein and an opening formed on one side;
a pack lid configured to cover the opening;
a partition frame coupled to the pack case so as to partition the storage space; and
a bolt member having at least a portion configured to pass through the pack lid and to be coupled to the partition frame, and a first thread portion disposed at an end close to the partition frame,
wherein the first thread portion comprises
a high-temperature-sensitive material whose physical properties change in a predetermined high-temperature environment so that bonding strength between the bolt member and the partition frame is weakened.

2. The battery pack according to claim 1,
wherein the pack lid
is configured to swell when internal pressure of the storage space increases.

3. The battery pack according to claim 1,
wherein the high-temperature-sensitive material
is configured to melt in a predetermined high-temperature environment and function as a lubricant.

4. The battery pack according to claim 1,
wherein the high-temperature-sensitive material
is configured as a resin material.

5. The battery pack according to claim 1,
wherein the high-temperature-sensitive material
is coated on an outer surface of the first thread portion.

6. The battery pack according to claim 1,
wherein a fastening hole having a female thread is formed in the partition frame so that the bolt member is fastened thereto, and
wherein a length of the first thread portion corresponds to a depth of the fastening hole.

7. The battery pack according to claim 1,
wherein the bolt member
further comprises a second thread portion formed continuously with the first thread portion on a side far from the partition frame.

8. The battery pack according to claim 7,
wherein the second thread portion
is configured as a metal material.

9. The battery pack according to claim 7,
wherein the second thread portion
has an outer surface that is treated with heat treatment locking coating.

10. The battery pack according to claim 7,
wherein the second thread portion
comprises a core extending toward the partition frame, and
wherein the first thread portion is configured so that the high-temperature-sensitive material is formed to surround the core.

11. The battery pack according to claim 1,
further comprising a middle member disposed between the pack lid and the partition frame, and configured so that the bolt member passes therethrough.

12. The battery pack according to claim 11,
wherein the middle member
is in close contact with the pack lid and the partition frame.

13. The battery pack according to claim 11,
wherein the middle member is configured as
a bonding nut having a female thread formed on an inner side and at least a portion bonded to the pack lid.

14. The battery pack according to claim 1,
further comprising a sealing material disposed between the pack lid and the bolt member to seal them.

15. A vehicle comprising at least one battery pack according to any one of claims 1 to 14.
